# EUROPEAN PATENT SPECIFICATION

(11) **EP 2 048 562 B1**
(45) Date of publication and mention of the grant of the patent: **12.08.2009**
(21) Application number: 07020028.2
(22) Date of filing: 12.10.2007
(51) Int. Cl.: G05B 23/02, G05B 13/04

(54) **Method and device for providing at least one input sensor signal for a control and/or monitoring application and control device**
Verfahren und Vorrichtung zur Bereitstellung mindestens eines Eingangssensorsignals für eine Steuerungs- und/oder Überwachungsanwendung sowie Steuerungsvorrichtung
Procédé et dispositif pour la fourniture d'au moins un signal de capteur d'entrée pour une application de contrôle et/ou de surveillance et dispositif de contrôle

(43) Date of publication of application: 15.04.2009
(73) Proprietor: SIEMENS AKTIENGESELLSCHAFT, 80333 München (DE)
(72) Inventor: Ehlers, Julian, S73 1Y7 Saskatoon, SK (CA); Diop, Amadou Professor, G5L 2W9 Rimouski (CA)

(56) References cited:
- WO-A-01/76925
- US-A- 5 289 379
- US-A1- 2006 033 338
- US-A1- 2007 156 259

## Description

The present invention relates to a method and a device for providing at least one input sensor signal for a control and/or monitoring application regarding an installation, in particular a wind turbine. The invention further relates to a control device for an installation, in particular for a wind turbine.

Due to the increased number of off-shore wind parks there is a need for improved control and monitoring methods as well as for improved control and monitoring devices for the wind turbines of such wind parks. The reason is that there is a trend to locate off-shore wind parks further away from the coast in open sea. However, maintenance is more difficult to perform in open sea locations than in near coastal locations. Moreover, bringing technicians to an open sea location is expensive, time consuming, and potentially dangerous. Therefore, one likes to have maintenance intervals as long as possible and one tries to reduce the number of shut downs due to wind turbine failures. In order to reduce the number of shut downs predictive maintenance is sometimes performed which means that the deterioration of a component is detected in an early stage and the respective component is repaired or replaced before a fault condition occurs which would lead to a wind turbine failure and, as a consequence, to a shut down. On the other hand, improved control schemes such as, for example, individual pitch control for each blade allow for reducing the loads acting on the components of a wind turbine, increasing the wind turbine components' lifetimes and extending maintenance intervals.

However, the use of a sophisticated control method and sophisticated monitoring of the wind turbine's condition is limited by the information which can be extracted from sensor signals measuring various parameters of the wind turbine.
The wind velocity in the wind direction is an example of a parameter which cannot be measured with sufficient accuracy for use in wind turbine control. Hence, it has been proposed in US 2006/0033338 A1 and WO 2007/010322 A1 to use a wind flow estimator to estimate the air flow using sensed rotor rotation rate, blade pitch angle and tower position. The estimated flow states are then used in a control algorithm to calculate a desired blade pitch angle using the estimated fluid flow. The properties of the wind turbine itself may also be both difficult to measure, and necessary for the control of the turbine. S. Donders describes in "Fault Detection and Identification for Wind Turbine Systems: a closed-loop analysis" Master's Thesis, University of Twente, Faculty of Applied Physics, Systems and Control Engineering, 2002 an application of state estimation for fault diagnosis in pitch actuators. Parameter estimation and multiple model estimation were both tested and the multiple model estimation was found to be suitable for diagnosing an unknown gain and an unknown delay in a pitch actuator.

State estimation to determine structural states and wind shears on wind turbines are, for example, described in M. M. Hand "Mitigation of Wind Turbine/Vortex Interaction Using Disturbance Accommodating Control" Technical Report TP-500-35172, National Renewable Energy Laboratory, December 2003, M. M. Hand and M. J. Balas "Load Mitigation Control Design for a Wind Turbine Operating in the Path of Vortices", Presented at the Science of Making Torque from Wind, 2004 Special Topic Conference, Delft NL, 2004, A. Wright "Modern Control Design for Flexible Wind Turbines" PhD Thesis, University of Colorado, Boulder, Department of Aerospace Engineering Science, 2003 and A. D. Wright and M. J. Balas, "Design of Controls to Attenuate Loads in the Controls Advanced Research search Turbine" ASME J. Sol. Energy Inc., 126(4):1083-1091, 2004.

WO 01/76925 A1 describes a digital or analogue sensor control system of a car. In this system, a recursive filter, preferably a Kalman filter provides an estimate of a predetermined physical parameter and outputs a physical parameter signal to a sensor signal processing unit which is adapted for computing one or more virtual sensor signals based on the physical parameter signal. In one example of a virtual sensor real angular speed signals are received from an ABS and are transformed to scaled velocities at selected positions in the car.

US 2007/0156259 A1 describes a system generating output ranges for model predictive control having input thrown switched dynamics. In this document obtaining anticipated future data is described.

US 5,289,379 describes a land vehicle suspension control system and the related control circuit.

However, despite the stated estimation schemes in the state of the art, control and monitoring of installations such as, e.g. wind turbines, still suffers from the restricted availability of sensor signals for the control devices and/or monitoring devices.

It is therefore an objective of the present invention to provide an improved method and an improved device for providing at least one input sensor signal for a control and/or monitoring application. It is a further objective of the present invention to provide an improved control device.

The first objective is solved by a method of providing at least one input sensor signal for a control and/or monitoring application as claimed in claim 1 and by a device for providing at least one input sensor signal for a control and/or monitoring device as claimed in claim 14. The further objective is solved by a control device as claimed in claim 15.
The depending claims contain further developments of the invention. The features of the depending claims may be advantageous independently from or in combination with each other.

The inventive method of providing at least one input sensor signal for a control and/or monitoring application regarding an installation comprises the steps of:
- providing at least one real sensor signal based on at least one quantity measured at the installation;
- providing at least one dynamical model of the installation;
- estimating states on at least the basis of the at least one sensor signal using the dynamical model;
- generating at least one virtual sensor signal from the estimated states by calculating at least one local condition at the installation from the estimated states.and establishing the at least one virtual sensor signal from the at least one local condition; and
- providing the at least one virtual sensor signal as the at least one input sensor signal for the control and/or monitoring application. The installation may, in particular, be a wind turbine. In the inventive method, the installation is a wind turbine and the dynamic model comprises a representation of structural dynamics of the wind turbine and their interaction, with wind shears and/or the wake of the wind turbine.

The estimated states are wind shears and/or wake states and/or estimated structural states of the wind turbine, and the control and/or monitoring application is one of the following:(a) a blade aerodynamic control based on an aerodynamic input based on local flow conditions where the at least one virtual sensor signal represents a local wind flow condition; (b) a pitch servo control based on bearing forces and/or bearing moments where the at least one virtual sensor signal represents a bearing force and/or a bearing moment; (c) a fatigue damage estimator based on long-term loads where the at least one virtual sensor signal represents a load within the wind turbine.

The inventive method allows for providing virtual sensor signals representing installation parameters which are not or not easily accessible by a direct measurement. Such virtual sensor signals can then be used in the control application or the monitoring application. In this context, calculation of the at least one local condition can be seen as an estimated measurement. This estimated measurement permits the virtual detection of quantities that would otherwise be difficult to measure or not measurable at all.

The provision of virtual sensor signals for parameters which are difficult to acquire directly by a real measurement increases the number of parameters available for control or monitoring action. The increased number of parameters allows for a higher flexibility in the build up of control algorithms or monitoring algorithms. If there is a control algorithm or a monitoring algorithm which needs a sensor signal input which is not or not easily accessible by real sensors such an algorithm could not be used easily in the past. However, with the inventive method of providing at least one input sensor signal such a sensor signal can be generated as a virtual sensor signal based on the available real sensor signal(s).

In the inventive method the state estimator relies on measured signals to compute state estimates. The particular choice of these signals can provide advantages in cost, reliability and safety over the alternative of directly measuring local conditions, if the direct measurement is possible at all. Moreover, the properties of the state estimation algorithm may be tuned to advantage in particular applications. Examples of properties which permit tuning are robustness to modelling errors, computational cost, sensitivity to finite numerical precision and accuracy under measurement delays.

The calculation of the at least one local condition may be based on a non-linear relation between states and/or a dynamical relation between states. The non-linear relation and/or dynamical relation may optionally be provided in the form of a look up table. However, the calculation of the at least one local condition may also be based on a linear relation given by a perturbation analysis of the states about the steady value. The last mentioned implementation of the calculation of the at least one local condition is, in particular, suitable if only small deviations from the steady value are expected to occur. Moreover, the calculation of the at least one local condition can, in addition, also based on the result of at least one real measurement.

Optionally, estimating the states may be performed on the basis of at least one real sensor signal together with at least one output signal which is provided by the control and/or monitoring application. This provides feedback which may be used to counteract model inaccuracies or to take into account unknown controller dynamics.

As a further option, estimating the states may also comprise an estimation of future states which offers the possibility of providing pre-estimated virtual sensor signals and thereby taking into account delays in the measurement of the real sensor signal. With delayed real sensor signals the calculated virtual sensor signal based on such delayed real signals would lead to a delay in the virtual sensor signal as well. By calculating future states this delay can be counteracted by calculating estimated states which lie in the future with respect to the real sensor signals by a time which equals the delay. Optionally, multiple future virtual sensor signals can be computed from a multitude of future input scenarios.

For estimating the states a recursive linear filter, for example an infinite impulse response Kalman filter or a finite impulse response Kalman filter may be used.

In an advantageous implementation of the general inventive method the installation is a wind turbine and the control and/or monitoring application is blade aerodynamic control based on local flow conditions. The blade aerodynamic control may, for example, be load control, rotor speed control, pitch control or stall control. In this implementation the dynamical model would comprise a representation of structural dynamics of the wind turbine and their interaction with wind shears and/or the wind turbine wake. The estimated states are then wind shears and/or wake states and/or estimated structural states of the wind turbine. The at least one virtual sensor signal represents a local flow condition. In this first implementation any available measurement signal may be used as an input for the state estimation. However, signals from sensors inside the nacelle of a wind turbine are preferred for cost, maintenance and reliability reasons. Furthermore, structural states and rotor blade wind speeds may be well estimated from signals generated by sensors inside the nacelle.

The dynamical model is not limited in the present implementation to particular combinations of structural states, wind shear states, and states of the wind turbine wake. Preferably, the dynamical model comprises at least first mode dynamics of tower fore/aft bending and blade flap bending, and wind shears representing at least zero and first wind speed harmonics in the rotor azimuth.

Moreover, any suitable variables may be used to characterise the local flow conditions, i.e. the results of virtual measurements in the form of virtual sensor signals. Examples are: angle of attack, relative velocity or velocity components, local pressures, local airfoil acceleration and non-dimensional variables such as Reynolds numbers and coefficients of lift, drag, normal force, or moment. The local flow variables may be calculated from the estimated structural state and wind shears in one of the three following ways:
1. From vector relations between estimated wind speed components and estimated structural states of a wind turbine.
2. From a general, non-linear and/or dynamic relation, optionally in look-up table format.
3. From a linear relation given by perturbation analysis of the structural states and wind shears about their steady values.

Since wind speed estimates are defined over the entire rotor plane, the virtual sensor signal may as well include a wind speed ahead of the blades.

In a further advantageous implementation of the inventive method the installation is a wind turbine and the control and/or monitoring application is a pitch servo control based on bearing forces and/or bearing moments. Typical forces and moments that affect the control of the pitch bearing angle are the applied control moment, disturbance moments from friction, torsional vibrations, gravitational forces and aerodynamic forces. In this case the dynamical model comprises a representation of structural dynamics of the wind turbine and their interaction with wind shears and/or the wake of the wind turbine. The estimated states are wind shears, and/or wake states, and/or estimated structural states of the wind turbine. The at least one virtual sensor signal that is generated from the estimated states represents a bearing force and/or a bearing moment.

In the described implementation a control algorithm can generate a control torque in response to pitch angle or pitch rate commands, taking into account the disturbance torques and/or varying moments of inertia of the blade pitch rotation as the blade bends. The calculation of bearing forces and moments can be done on the basis of a model of the forces and the moments produced by structural states and wind shears, and on the basis of the way that the forces and the moments are transmitted to the pitch bearing. The model for the forces and moments in the blade may be a linear representation of a non-linear model or a fully non-linear model. Bearing friction can, for example, be assumed to be of Coulomb type and to be proportional to the bending moment at the root of the blade as it is described by H. Markou et al. in "Morphological Study of Aeroelastic Control Concepts for Wind Turbines", Technical Report ECN-E-06-056, ECN Wind Energy, 2007. In particular, the model may further comprise an optional representation of blade torsion as a further degree of freedom.

In a third advantageous implementation of the inventive method the installation is again a wind turbine. The control and/or monitoring application is a fatigue damage estimator based on long term loads. In this case the dynamical model comprises a representation of structural dynamics of the wind turbine and their interaction with wind shears and/or the wake of the wind turbine. The estimated states are wind shears, and/or wake states, and/or estimated structural states of the wind turbine. The at least one virtual sensor signal that is generated from the estimated states represents a load within the wind turbine. As in the first and second implementations the load calculation can be a linear or non-liner map from the structural states and wind shears to a set of estimated loads at desired locations in the structure.

The virtual sensor signal, which then represents a load series of such virtual sensor signals, can be stored for a period of time. If the stored loads are processed as time series estimating fatigue can be done by any of the well known techniques for estimating fatigue.

An inventive device for providing at least one input sensor signal for a control and/or monitoring device regarding an installation, in particular a wind turbine, comprises at least one model unit containing a dynamical model of the installation which is designed to output a model representation of the installation. It further comprises at least one state estimator which contains a sensor signal input connectable to an output of a sensor of the installation for receiving a real sensor signal provided by said sensor. The at least one state estimator is connected to the at least one model unit for receiving a model representation of the installation and designed to estimate and to output states on at least the basis of the at least one real sensor signal and the model representation of the installation. In addition, the inventive device comprises at least one signal generator which is connected to the state estimator for receiving estimated states. The signal generator is designed to generate at least one virtual sensor signal from the estimated states and comprises an output connectable to a control and/or monitoring device for outputting said at least one virtual sensor signal. In the inventive device, the installation is a wind turbine and the dynamic model comprises a representation of structural dynamics of the wind turbine and their interaction with wind shears and/or the wake of the wind turbine. The estimated states are wind shears and/or wake states and/or estimated structural states of the wind turbine, and the control and/or monitoring application is one of the following:(a) a blade aerodynamic control based on an aerodynamic input based on local flow conditions where the at least one virtual sensor signal represents a local wind flow condition; (b) a pitch servo control based on bearing forces and/or bearing moments where the at least one virtual sensor signal represents a bearing force and/or a bearing moment; (c) a fatigue damage estimator based on long-term loads where the at least one virtual sensor signal represents a load within the wind turbine.

The inventive device is suitable for performing the inventive method. In particular the signal generator is adapted to generate the at least one virtual sensor signal from the estimated state by calculation of at least one local condition at the installation from the estimated states, i.e. by an estimated or virtual measurement. The states on the basis of which the virtual sensor signal is generated in the signal generator are established by the state estimator on the basis of the dynamical model of the model unit.

An inventive control device is adapted to act on a controlled system of an installation, such as a wind turbine, by means of a controlled signal in order to influence an actual value of the controlled system. Such an inventive control device comprises a controller which is designed to generate and to output, at least on the basis of a deviation of the actual value from a setpoint or a reference value, a controller output signal representing a control signal to be generated for the controlled system in order to at least indirectly influence said actual value. An actuator of the inventive control device is connected to the controller for receiving the controller output signal. It is designed to generate and to output, on the basis of the received controller output signal, said control signal. The inventive control device further comprises an inventive device for providing at least one input sensor signal. This device is connected to at least one sensor of the controlled system for receiving a real sensor signal provided by said sensor. The virtual sensor signal provided by said device is then the actual value which is input into the controller. The inventive control device allows the control action to be performed not only on the basis of real sensor signals but also on the basis of sensor signals that would be suitable for running a control algorithm but that are not readily available by a real measurement. Such useful sensor signals are, according to the invention, provided as virtual sensor signals.

The inventive control device may further comprise an actuator model unit which is connected to the controller for receiving the controller output signal. The actuator model unit contains an actuator model and is designed to generate a simulated control signal on the basis of the controller output signal and the actuator model. A difference function unit is connected to the actuator for receiving the control signal and to the actuator model unit for receiving the simulated control signal. The difference function unit is designed to generate and to output a difference signal representing the difference between the control signal and the simulated control signal. The controller is then also connected to the difference function unit to receive the difference signal and is designed to generate and to output said controller output signal not only on the basis of the deviation of the actual value from the setpoint or the reference value but also on the basis on the difference signal. This allows unknown actuator effects to be taken into account.

Further features, properties and advantages of the present invention will become clear from the following description of embodiments in conjunction with the accompanying drawings.

Figure 1 shows the general architecture of a system using an inventive control device.

Figure 2 shows the architecture of Figure 1 in the special case of individual blade aerodynamic control for a wind turbine.

Figure 3 shows the flow geometry at a wind turbine rotor blade outboard location.

Figure 4 shows a control device with compensation for unknown actuator dynamics and rate limits.

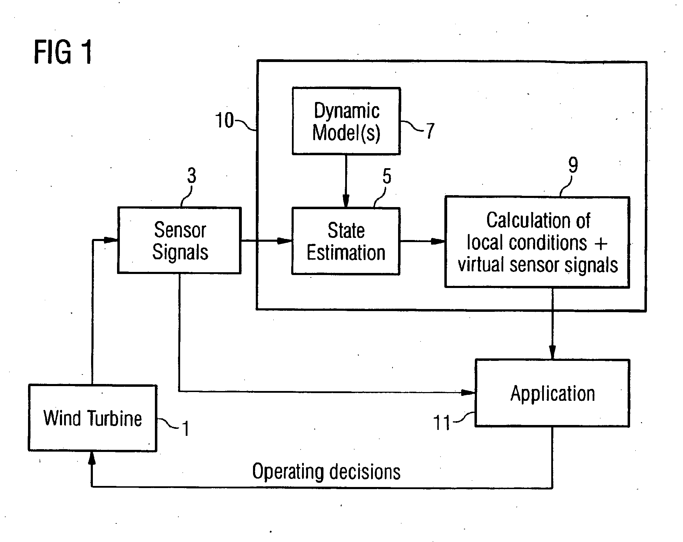

The general structure of an application using an inventive control device will be described with respect to Figure 1. This schematic figure shows, as an example for an installation which is to be controlled or monitored, a wind turbine
1. The wind turbine is equipped with sensors 3 which provide real sensor signals that represent the results of measurements for measurable parameters. For example, suitable sensors provide measurements for the electrical output of the generator, accelerations in the nacelle and/or the tower, yaw forces and moments as well as for main bearing forces and moments. In particular, sensors located in the nacelle of the wind turbine are preferable due to low cost, easy maintenance and high reliability as well as due to the fact that only little benefit is achieved by placing sensors at less accessible locations outside the nacelle.

The system further comprises a state estimator 5 and a model unit 7. The state estimator 5 is connected to at least one of the sensors 3 for receiving a real sensor signal representing the measured parameter. It is further connected to the model unit 7 for receiving model parameters. The state estimator 5 is designed to perform a state estimation based on the received model parameters and the received real sensor signals. The outputs provided by the state estimator are estimated states representing, in the present example:of a wind turbine as an installation, a set of estimated wind shears and estimated structural states of the wind turbine 1.

A finite impulse response Kalman filter is used in the present embodiment to perform the state estimation. However, an infinite impulse response Kalman filter or any other recursive linear filter could be used as well. In fact, the invention is not restricted to any particular state estimation algorithm. The mentioned kinds of filters are only chosen because they allow for an efficient computation and their results are sufficiently accurate.

A signal generator 9 is connected to the state estimator 5 for receiving the estimated states. It is designed to generate at least one virtual sensor signal from the estimated states by mapping the estimated wind shears and structural states to at least one local condition, i.e. a condition at a specified location of the wind turbine 1. This mapping to the at least one local condition can be regarded as an estimated measurement of this condition. From the local condition, the signal generator 9 calculates a virtual sensor signal representing this local condition.

A control and/or monitoring device 11 is connected to the signal generator 9 for receiving the virtual sensor signals as an input. Based on this input and, optionally, based on further inputs from real sensors, i.e. based on real sensor signals, the control and/or monitoring device performs the desired control and/or monitoring action and outputs operating decisions to the wind turbine 1.

In the described structure, the state estimator 5, the model unit 7 and the signal generator 9 form a device 10 for providing an input sensor signal for the control and/or monitoring device 11.

One of the key features of the system described with respect to Figure 1 is the mapping of the estimated states to the conditions at specified locations of the wind turbine. Suitable variables for representing local states based on the estimated states are the angle of attack, the relative velocity of the wind or velocity components of the wind, local pressures, local airfoil accelerations as well as non-dimensional variables such as the Reynolds number, drag coefficients, lift coefficients, forces or moments acting on the blade.
The local flow variables may be calculated from the estimated states, i.e. from the estimated wind shears and the estimated structural states in one of three ways: from vector relations between estimated wind speed components and structural states, from a general, non-linear and/or dynamic relations, which may optionally be in a look-up table format, or from a linear relation given by perturbation analysis of the estimated states and estimated wind shears about their steady values.

The estimated wind shears and the estimated structural states are calculated from a dynamical model provided by the model unit 7. This dynamical model is not limited to particular combinations of structural states, wind shear states, and states of the turbine wake but may comprise at least first mode dynamics of tower fore and aft bending as well as blade flap bending, and wind shears representing at least zero and first wind speed harmonics in the rotor azimuth.

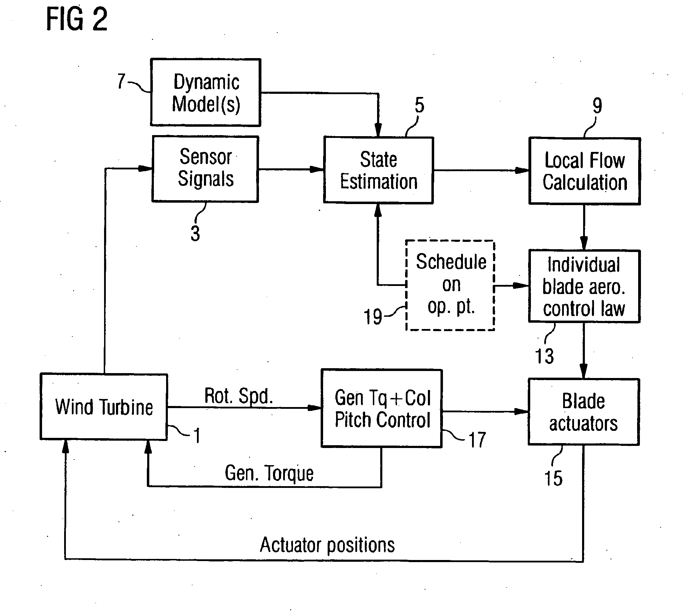

A specific application of the control system shown in Figure 1 will now be described with respect to Figure 2. In this special implementation an individual blade aerodynamic control based on estimated local flow conditions at a wind turbine is performed. The dynamical model comprises a simple representation of the structural dynamics and their interaction with simple wind shears. However, the dynamical model is not limited to particular combinations of structural states, wind shear states, and wake sates. It may comprise at least first mode dynamics of tower fore/aft bending and blade flap bending as well as wind shears representing at least zero and first order wind speed harmonics in the rotor azimuth.

In this implementation, it has been shown to be practical to use a high speed shaft torque sensor, acceleration sensors for measuring the nacelle fore/aft acceleration and the nacelle side-side acceleration, a yawing sensor measuring the yawing moment at the main rotor bearing and a nodding sensor measuring the nodding moment at the main rotor bearing. All these sensors provide real sensor signals which are used by the state estimator 5 to estimate wind shears and structural states of the wind turbine based on the dynamic model provided by the model unit 7. From the estimated states the signal generator 9 calculates local flow conditions at specified locations of the wind turbine. Examples of such local flow conditions are the angle of attack, the relative velocity of the wind or velocity components of the wind, local pressures at specified airfoil locations and local airfoil accelerations. Alternatively or additionally, non-dimensional variables such as Reynolds number, lift coefficient, drag coefficient, normal force or normal moment of the rotor blades are also suitable to characterise the local flow conditions.

At least one of such local flow conditions characterising variables is input in the form of a virtual sensor signal to a pitch controller 13 which calculates individual pitch angles to be set for each rotor blade of the rotor in order to reduce structural loads acting on the wind turbine. The controller 13 calculates, based on the virtual sensor signals provided by the signal generator 9, a controller output signal which is received by blade actuators 15 which are connected to the controller 13 and which are adapted for setting desired individual pitch angles for each rotor blade based on the controller output signal. By accordingly setting the pitch angles of the rotor blades, the loads to the wind turbine are reduced.

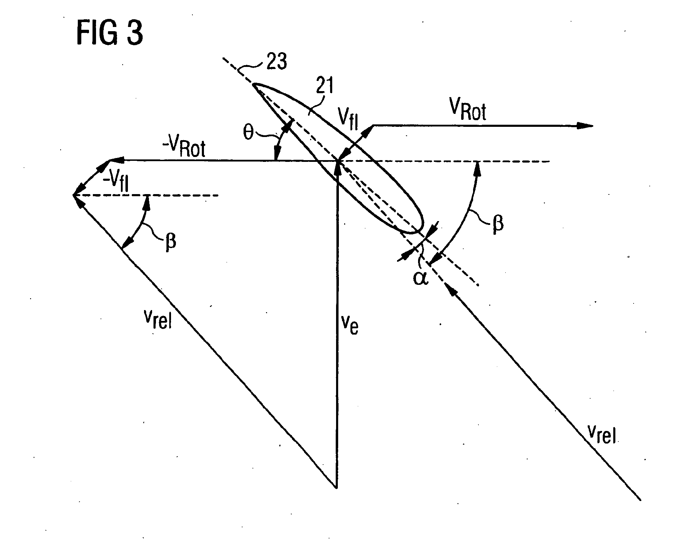

One possibility of mapping the estimated structural states and wind shears is to use vector relations between wind speed components together with structural parameters of the wind turbine such as rotational speed of the rotor and the pitch angle Θ. These relations are shown in Figure 3 which shows the section through a wind turbine rotor blade 21 and various vectors representing rotor speeds or wind speeds.

An example for calculating local flow conditions, namely the angle of attack and the relative wind speed, from the estimated wind shear will now be described with respect to Figure
3. It can be assumed that the pitch angle Θ and the rotor's rotational speed Ω are known from a real measurement and, for example, the speed of the blade's motion in flapwise direction and the wind shear are estimated on the basis of a dynamical model by using the sensor signals mentioned above. The rotational speed **v**ᵣₒₜ of a point at radius R of the rotor (the rotational speed **v**ᵣₒₜ is the product ΩR of the rotor's rotational speed Ω and the Radius R) gives rise to a wind velocity -**v**ᵣₒₜ relative to the rotor blade within the rotational plane of the rotor. Temporal variations in the deflection of the blade give rise to a further component in the velocity of the blade position under consideration. This velocity component is denoted **v**_{fl} in Figure 3. the resulting contribution to the relative wind vector is -**v**_{fl} in the frame of reference of the blade position under consideration. The relative wind **v**ᵣₑₗ which impinges on the rotor blade 21 under the angle of attack α relative to the chord line 23 can then be derived by the vector sum of the estimated wind speed **v**ₑ provided by the state estimator 5 at a given location of the rotor blade and the wind speed vectors -**v**ᵣₒₜ and -**v**_{fl}. With the thus determined relative wind speed **v**ᵣₑₗ, one can determine the inflow angle of the relative wind relative to the rotor blade. This inflow angle is denoted in Figure 3 by β. From the inflow angle β one can then derive the angle of attack α by just subtracting the pitch angle Θ from the inflow angle β.

Please note that the description which has been given with respect to Figure 3 is only an example of how to derive parameters from the estimated wind shears. However, there are more possibilities to derive local parameters, namely using general non-linear and/or dynamic relations or using linear relations given by perturbation analysis of states and wind shears about their steady values.

The angle of attack α and the velocity of the relative wind **v**ᵣₑₗ can be used for constructing a simple controller which significantly reduces structural loads acting on the blades. Since the estimated wind speed is defined over the entire rotor blade such a controller may optionally include speeds of relative wind ahead of the blades.

In addition, the application of individual pitch control may be further enhanced by stall prediction. Stall is characterised by the location of the trailing edge stagnation point or equivalently by the unsteady coefficient of lift. The dynamics of the separation point's location depend on airfoil properties, angle of attack and relative flow velocity. In the context of the present invention the necessary angle of attack and relative velocity can be determined from state estimates, as has been described with respect to Figure 3. The location of the trailing edge stagnation point is then determined by a set of non-linear dynamic relations, and the pitch angle is adjusted to prevent the onset of fully developed stall.

Alternatively to controlling aerodynamic loads by setting individual pitch angles, aerodynamic loads may also be controlled by adaptation of blade or airfoil geometry. Examples of adaptable geometry are partial-span blade pitch, blade twist, micro-tabs, micro-jets, flexible trailing edges, variable blade camber and leading edge droop. Such adaptable geometries are, for example, described by Markou et al. in "Morphological Study of Aeroelastic Control Concepts for Wind Turbines", Technical Report ECN-E-06-056, ECN Wind Energy, 2007. Preliminary work in the application of adapted trailing edge control has used acceleration measurements at outboard blade locations (compare P. Andersen "Load Alleviation on Wind Turbine Blades using Variable Airfoil Geometry (2D and 3D study) Master's Thesis, Technical University of Denmark, Department of Mechanical Engineering, Section of Fluid Mechanics, 2005). Measurements of accelerations can, with the present invention, be replaced by estimated accelerations, either by deriving estimated structural states if measurement noise is fully rejected in the state estimates, or as a linear combination of estimated structural states and wind shears if numerical derivation gives incorrect results. An appropriate linear relation is set up by perturbation of a general non-linear aeroelastic model, perturbing each of the states and wind shears about its operating point and recording the affect on the measurement.

In addition to the components already described, the system shown in Figure 2 may comprise a generator torque and collective pitch controller 17. This generator torque and collective pitch controller 17 calculates, based on a rotor speed signal provided by a rotor speed sensor of the wind turbine, a controller output signal representing a generator torque to be set at the wind turbine and a controller output signal representing a collective pitch to be set by the actuators 15 for each rotor blade. The collective pitch represents a pitch angle to be set for each rotor blade which is identical for each rotor blade. Such collective pitch control is, in particular, used for active power control of the wind turbine.

As also shown in Figure 2, an optional scheduling module 19 may be present for scheduling of the estimator and controller on operating point. In practise, the individual pitch control sets in at wind conditions where the output power of the wind turbine is limited to the rated power of the machine to prevent overloading of the structure and the electrical hardware. If the wind is lower than a certain threshold the output power is less than the rated power so that overloading is not an issue. The scheduling unit 19 causes the controller 13 to perform control action when the wind speed is high enough so that the wind turbine is driven with the output power limited to the rated power.

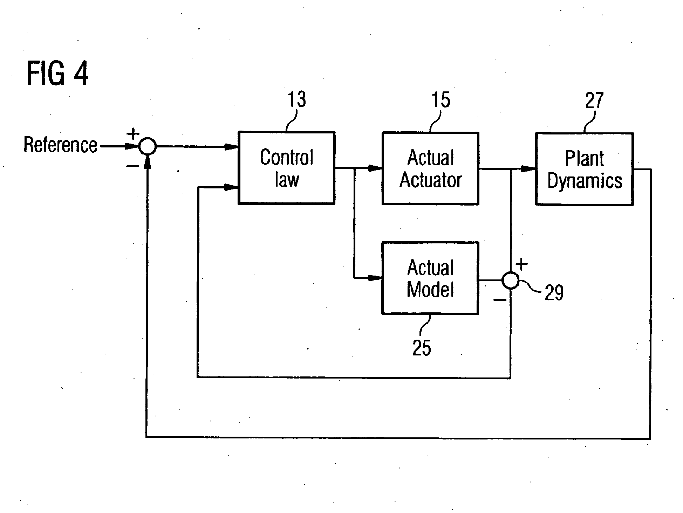

A special development of the controller 13 and the actuator 15 shown in Figure 2 is shown in Figure 4. This special development allows the control signal to be corrected for un-modelled actuator dynamics, such as pitch rate limits. The figure shows the controller 13, the blade actuator 15 and a block 27 which represents a combination of the wind turbine 1, the sensor 3, the state estimator 5, the dynamic model unit 7 and the signal generator 9 of Figure 2. The control signal which is output by the blade actuator 15 is fed to block 27 and there in particular to the wind turbine 1.

In addition, the control system shown in Figure 4 comprises an actuator model unit 25 which is connected in parallel to the actuator 15. The controller output signal of the controller 13 is also fed to the actuator model unit 25 which comprises a model of the actuator and which models a simulated control signal on the basis of the controller output signal.

The modified control system further comprises a difference function unit 29 which is connected to the output of the blade actuator 15 and to the output of the actuator model unit 25. The difference function unit 29 receives both the control signal and the simulated control signal and subtracts the simulated control signal from the control signal. The thus derived difference is then fed back as an input signal to the controller 13. By this measure unknown actuator dynamics and rate limits can be taken into account in the control system.

The invention has been described in detail with respect to Figures 2 and 3 in the context of individual blade aerodynamic control. However, the invention can also be implemented in the context of pitch servo control and fatigue damage estimation. In this case, the controller 13 and the blade actuators 15 described with respect to Figure 2 would be replaced by appropriate controllers and actuators or appropriate monitoring applications, respectively.

The examples described in the embodiments of the invention show exemplary advantages achievable by the invention. Using the invention in the context of controlling blade aerodynamics based on local aerodynamic conditions leads to a simple, effective controller that reduces loads in the structure and that can take into account non-linear pitch actuator dynamics and stall dynamics. Problems associated with direct flow measurement can be avoided.

In case the invention is used in the context of pitch servo control the accuracy of such a control can be improved by the knowledge of the disturbance torques acting on the pitch bearing. It is not necessary to measure loads or displacements in the blades as these values can be estimated from other signals.

In case the invention is used in the context of fatigue damage estimation, monitoring of loads in the structure becomes possible without directly measuring the loads. Used as a back up to an existing monitoring system, the embodiment improves reliability in case of sensor failures and serves as a diagnostic tool to identify such failures. In applications where the particular load is not measured directly, the embodiment extends the capabilities of monitoring systems.

By the discussed embodiments it has been shown that the present invention is advantageous in many contexts of controlling and monitoring. However, further variations of the invention which have not been explicitly described, are possible. For example, the signal input to the estimator may be preconditioned in any suitable manner. In addition, the dynamical model may optionally include states describing the wake of the turbine. The dynamical model may also be replaced by multiple dynamical models, each with different modelling assumptions. The estimator is then replaced by a bank of state estimators where each estimator estimates the states of a different model from the same set of input signals. The appropriate model(s) at a given time is/are then selected by an analysis of the residuals between the signal inputs to the estimators and the estimates of the same signals using the output of each estimator. Furthermore, in case where the application generates control signals, these control signals may be fed back to the estimator, optionally by a model of the actuator transfer function or by non-linear dynamics. Measured control inputs may also be fed back to the estimator.

## Claims

1. A method of providing at least one input sensor signal for a control and/or monitoring application (13) regarding an installation (1), comprising the steps of:
- providing at least one real sensor signal based on at least one quantity measured at the installation (1);
- providing at least one dynamical model of the installation;
- estimating states on at least the basis of the at least one sensor signal using the dynamical model;
- generating at least one virtual sensor signal from the estimated states by calculating at least one local condition at the installation from the estimated states and establishing the at least one virtual sensor signal from the at least one local condition;
- providing the at least one virtual sensor signal as the at least one input sensor signal for the control and/or monitoring application (13),
**characterised in that**
- the installation is a wind turbine (1),
- the dynamic model comprises a representation of structural dynamics of the wind turbine (1) and their interaction with wind shears and/or the wake of the wind turbine,
- the estimated states are wind shears and/or wake states and/or estimated structural states of the wind turbine(1); and
- the control and/or monitoring application is one of the following:
(a) a blade aerodynamic control (13) based on an aerodynamic input based on local flow conditions where the at least one virtual sensor signal represents a local wind flow condition;
(b) a pitch servo control based on bearing forces and/or bearing moments where the at least one virtual sensor signal represents a bearing force and/or a bearing moment;
(c) a fatigue damage estimator based on long-term loads where the at least one virtual sensor signal represents a load within the wind turbine (1).

2. The method as claimed in claim 1, in which the calculation of the at least one local condition is based on a non-linear relation between states.

3. The method as claimed in claim 1 or claim 2, in which the calculation of the at least one local condition is based on a dynamical relation between states.

4. The method as claimed in claim 1 or claim 2, in which the calculation of the at least one local condition is based on a linear relation given by a perturbation analysis of the states about their steady value.

5. The method as claimed in any of the claims 2 to 4, in which the calculation of the at least one local condition is, in addition, also based on the result of at least one real measurement.

6. The method as claimed in any of the preceding claims, in which at least one output signal is provided by the control and/or monitoring application (13) and in which estimating the states is performed on the basis of the at least one real sensor signal and the at least one output signal.

7. The method as claimed in any of the preceding claims, in which estimating states comprises estimating future states.

8. The method as claimed in claim 7, in which one or more sets of future states are estimated according to one or more future input scenarios.

9. The method as claimed in any of the preceding claims, in which estimating states is based on a recursive linear filter.

10. The method as claimed in any of the preceding claims, **characterised in that** the control and/or monitoring application is a blade aerodynamic control (13) based on an aerodynamic input based on local flow conditions where the at least one virtual sensor signal represents a local wind flow condition and **in that** the local flow is calculated from vector relations between estimated wind speed components and estimated structural states of the wind turbine (1).

11. The method as claimed in claim 10, in which the virtual sensor signal represents an estimated wind speed and/or the wind's angle of attack.

12. The method as claimed in claim 11, in which the virtual sensor signal represents an estimated wind speed ahead of a rotor blade.

13. The method as claimed in any of the claims 1 to 9, in which the control and/or monitoring application is a pitch servo control based on bearing forces and/or bearing moments where the at least one virtual sensor signal represents a bearing force and/or a bearing moment and in which the dynamic model further comprises a representation of blade torsion.

14. A device (10) for providing at least one input sensor signal for a control and/or monitoring device regarding an installation (1), comprising:
- at least one model unit (7) containing a dynamical model of the installation (1) which is designed to output a model representation of the installation (1);
- at least one state estimator (5) which contains a sensor signal input connectable to an output of a sensor (3) of the installation (1) for receiving a real sensor signal provided by said sensor (3), the at least one state estimator (5) being connected to the at least one model unit (7) for receiving a model representation of the installation (1) and being designed to estimate states on at least the basis of the at least one real sensor signal and the model representation of the installation (1) and to output said estimated states; and
- at least one signal generator (9) which is connected to the state estimator (5) for receiving estimated states, the signal generator being designed to generate at least one virtual sensor signal from the estimated states and comprising an output connectable to a control and/or monitoring device (13) for outputting said at least one virtual sensor signal,
**characterised in that**.
- the installation is a wind turbine (1),
- the dynamic model comprises a representation of structural dynamics of the wind turbine (1) and their interaction with wind shears and/or the wake of the wind turbine,
- the estimated states are wind shears and/or wake states and/or estimated structural states of the wind turbine(1); and
- the control and/or monitoring application is one of the following:
(a) a blade aerodynamic control (13) based on an aerodynamic input based on local flow conditions where the at least one virtual sensor signal represents a local wind flow condition;
(b) a pitch servo control based on bearing forces and/or bearing moments where the at least one virtual sensor signal represents a bearing force and/or a bearing moment;
(c) a fatigue damage estimator based on long-term loads where the at least one virtual sensor signal represents a load within the wind turbine (1).

15. A control device for acting on a controlled system of an installation (1) by means of a control signal in order to influence an actual value of the controlled system, the control device comprising:
- a controller (13) which is designed to generate and to output, at least on the basis of a deviation of the actual value from a setpoint or a reference value, a controller output signal representing a control signal to be generated for the controlled system in order to at least indirectly influence said actual value;
- an actuator (15) which is connected to the controller (13) for receiving the controller output signal, the actuator (15) being designed to generate and to output, on the basis of the controller output signal, said control signal; and
- a device (10) for providing at least one input sensor signal as claimed in claim 14, which is connected to at least one sensor (3) of the controlled system for receiving a real sensor signal provided by said sensor (3),
wherein
the virtual sensor signal is the actual value to be influenced.

16. The control device as claimed in claim 15, which further comprises
- an actuator model unit (25) which is connected to the controller (13) for receiving the controller output signal, the actuator model unit (25) containing an actuator model and being designed to generate a simulated control signal on the basis of the controller output signal and the actuator model,
- a difference function unit (29) which is connected to the actuator (15) for receiving the control signal and to the actuator model unit (25) for receiving the simulated control signal and which is designed to generate and to output a difference signal representing the difference between the control signal and the simulated control signal;
wherein the controller (13) is also connected to the difference function unit (29) to receive the difference signal and wherein the controller (13) is designed to generate and to output said controller output signal on the basis of the difference signal and the deviation of the actual value from the setpoint or the reference value.

## Patentansprüche

1. Verfahren zur Bereitstellung mindestens eines Eingangssensorsignals für eine Steuerungs- und/oder Überwachungsanwendung (13) betreffend eine Anlage (1), welches die folgenden Schritte umfasst:
- Bereitstellen mindestens eines realen Sensorsignals auf Grundlage von mindestens einer Menge, die an der Anlage (1) gemessen wurde;
- Bereitstellen mindestens eines dynamischen Modells der Anlage;
- Schätzen von Zuständen auf mindestens der Grundlage des mindestens einen Sensorsignals mithilfe des dynamischen Modells;
- Erzeugen mindestens eines virtuellen Sensorsignals anhand der geschätzten Zustände, indem mindestens eine lokale Bedingung an der Anlage anhand der geschätzten Zustände berechnet und das mindestens eine virtuelle Sensorsignal von der mindestens einen lokalen Bedingung hergeleitet wird;
- Bereitstellen des mindestens einen virtuellen Sensorsignals als das mindestens eine Eingangssensorsignal für die Steuerungs- und/oder Überwachungsanwendung (13),
**dadurch gekennzeichnet, dass**
- es sich bei der Anlage um eine Windenergieanlage (1) handelt,
- das dynamische Modell eine Darstellung der strukturellen Dynamik der Windenergieanlage (1) und ihrer Wechselwirkung mit Windscherungen und/oder der Wirbelschleppe der Windenergieanlage beinhaltet,
- die geschätzten Zustände Windscherungs- und/oder Wirbelschleppenzustände und/oder geschätzte strukturelle Zustände der Windenergieanlage (1) sind; und
- die Steuerungs- und/oder Überwachungsanwendung eine der folgenden ist:
(a) eine aerodynamische Rotorblattsteuerung (13) auf Grundlage eines aerodynamischen Eingangs, der auf lokalen Strömungsbedingungen basiert, wobei das mindestens eine virtuelle Sensorsignal eine lokale Windströmungsbedingung repräsentiert;
(b) eine Servo-Anstellwinkelsteuerung auf Grundlage von Auflagerkräften und/oder Auflagermomenten, wobei das mindestens eine virtuelle Sensorsignal eine Auflagerkraft und/oder ein Auflagermoment repräsentiert;
(c) ein Ermüdungsschadensschätzer, der auf langfristigen Belastungen basiert, wobei das mindestens eine virtuelle Sensorsignal eine Belastung innerhalb der Windenergieanlage (1) repräsentiert.

2. Verfahren wie in Anspruch 1 angegeben, wobei die Berechnung der mindestens einen lokalen Bedingung auf einer nichtlinearen Beziehung zwischen Zuständen basiert.

3. Verfahren wie in Anspruch 1 oder Anspruch 2 angegeben,
wobei die Berechnung der mindestens einen lokalen Bedingung auf einer dynamischen Beziehung zwischen Zuständen basiert.

4. Verfahren wie in Anspruch 1 oder Anspruch 2 angegeben,
wobei die Berechnung der mindestens einen lokalen Bedingung auf einer linearen Beziehung basiert, die sich durch eine Perturbationsanalyse der Zustände um ihren stationären Wert ergibt.

5. Verfahren wie in einem der Ansprüche 2 bis 4 angegeben, bei dem die Berechnung der mindestens einen lokalen Bedingung zusätzlich auch auf dem Ergebnis von mindestens einer realen Messung basiert.

6. Verfahren wie in einem der vorstehenden Ansprüche angegeben, bei dem mindestens ein Ausgangssignal von der Steuerungs- und/oder Überwachungsanwendung (13) bereitgestellt wird und bei dem das Schätzen der Zustände auf der Grundlage des mindestens einen realen Sensorsignals und des mindestens einen Ausgangssignals durchgeführt wird.

7. Verfahren wie in einem der vorstehenden Ansprüche angegeben, bei dem das Schätzen der Zustände das Schätzen zukünftiger Zustände umfasst.

8. Verfahren wie in Anspruch 7 angegeben, bei dem ein Satz oder mehrere Sätze von zukünftigen Zuständen entsprechend einem oder mehreren zukünftigen Eingangsszenario/-szenarien geschätzt wird/werden.

9. Verfahren wie in einem der vorstehenden Ansprüche angegeben, bei dem das Schätzen der Zustände auf einem rekursiven linearen Filter basiert.

10. Verfahren wie in einem der vorstehenden Ansprüche angegeben, **dadurch gekennzeichnet, dass** die Steuerungsund/oder Überwachungsanwendung eine aerodynamische Rotorblattsteuerung (13) ist, die auf einem aerodynamischen Eingang basiert, der auf lokalen Strömungsbedingungen basiert,
wobei das mindestens eine virtuelle Sensorsignal eine lokale Windströmungsbedingung repräsentiert, sowie **dadurch**, dass die lokale Strömung anhand von Vektorbeziehungen zwischen geschätzten Windgeschwindigkeitskomponenten und geschätzten strukturellen Zuständen der Windenergieanlage (1) berechnet wird.

11. Verfahren wie in Anspruch 10 angegeben, bei dem das virtuelle Sensorsignal eine geschätzte Windgeschwindigkeit und/oder den Blattanströmwinkel des Windes repräsentiert.

12. Verfahren wie in Anspruch 11 angegeben, bei dem das virtuelle Sensorsignal eine geschätzte Windgeschwindigkeit vor einem Rotorblatt repräsentiert.

13. Verfahren wie in einem der Ansprüche 1 bis 9 angegeben, bei dem die Steuerungs- und/oder Überwachungsanwendung eine Servo-Anstellwinkelsteuerung auf Grundlage von Auflagerkräften und/oder Auflagermomenten ist, wobei das mindestens eine virtuelle Sensorsignal eine Auflagerkraft und/oder ein Auflagermoment repräsentiert und wobei das dynamische Modell ferner eine Darstellung der Rotorblattverwindung umfasst.

14. Vorrichtung (10) zur Bereitstellung mindestens eines Eingangssensorsignals für eine Steuerungs- und/oder Überwachungsvorrichtung betreffend eine Anlage (1), welche folgendes umfasst:
- mindestens eine Modelleinheit (7), welche ein dynamisches Modell der Anlage (1) enthält und dafür ausgelegt ist, ein modellhafte Darstellung der Anlage (1) auszugeben;
- mindestens einen Zustandsschätzer (5), der einen Sensorsignaleingang besitzt, welcher mit einem Ausgang eines Sensors (3) der Anlage (1) verbunden werden kann, um ein reales Sensorsignal zu empfangen, das von dem besagten Sensor (3) bereitgestellt wird, wobei der mindestens eine Zustandsschätzer (5) mit der mindestens einen Modelleinheit (7) verbunden ist, um eine modellhafte Darstellung der Anlage (1) zu empfangen, und dafür ausgelegt ist, Zustände auf mindestens der Grundlage des mindestens einen realen Sensorsignals und der modellhaften Darstellung der Anlage (1) zu schätzen und die besagten geschätzten Zustände auszugeben; und
- mindestens einen Signalerzeuger (9), der mit dem Zustandsschätzer (5) verbunden ist, um geschätzte Zustände zu empfangen, wobei der Signalerzeuger dafür ausgelegt ist, mindestens ein virtuelles Sensorsignal anhand der geschätzten Zustände zu erzeugen, und einen Ausgang aufweist, der mit einer Steuerungs- und/oder Überwachungsvorrichtung (13) verbunden werden kann, um das besagte mindestens eine virtuelle Sensorsignal auszugeben,
**dadurch gekennzeichnet, dass**
- es sich bei der Anlage um eine Windenergieanlage (1) handelt,
- das dynamische Modell eine Darstellung der strukturellen Dynamik der Windenergieanlage (1) und ihrer Wechselwirkung mit Windscherungen und/oder der Wirbelschleppe der Windenergieanlage beinhaltet,
- die geschätzten Zustände Windscherungs- und/oder Wirbelschleppenzustände und/oder geschätzte strukturelle Zustände der Windenergieanlage (1) sind; und
- die Steuerungs- und/oder Überwachungsanwendung eine der folgenden ist:
(a) eine aerodynamische Rotorblattsteuerung (13) auf Grundlage eines aerodynamischen Eingangs, der auf lokalen Strömungsbedingungen basiert, wobei das mindestens eine virtuelle Sensorsignal eine lokale Windströmungsbedingung repräsentiert;
(b) eine Servo-Anstellwinkelsteuerung auf Grundlage von Auflagerkräften und/oder Auflagermomenten, wobei das mindestens eine virtuelle Sensorsignal eine Auflagerkraft und/oder ein Auflagermoment repräsentiert;
(c) ein Ermüdungsschadensschätzer, der auf langfristigen Belastungen basiert, wobei das mindestens eine virtuelle Sensorsignal eine Belastung innerhalb der Windenergieanlage (1) repräsentiert.

15. Steuerungsvorrichtung, um mittels eines Steuerungssignals auf ein gesteuertes System einer Anlage (1) einzuwirken, um einen tatsächlichen Wert des gesteuerten Systems zu beeinflussen, wobei die Steuerungsvorrichtung Folgendes umfasst:
- eine Steuerung (13), die dafür ausgelegt ist, mindestens auf der Grundlage einer Abweichung des tatsächlichen Wertes von einem Sollwert oder einem Bezugswert ein Steuerungsausgangssignal zu erzeugen und auszugeben, das ein Steuerungssignal repräsentiert, welches für das gesteuerte System erzeugt werden soll, um mindestens indirekt den besagten tatsächlichen Wert zu beeinflussen;
- einen Steller (15), der mit der Steuerung (13) verbunden ist, um das Steuerungsausgangssignal zu empfangen, wobei der Steller (15) dafür ausgelegt ist, auf der Grundlage des Steuerungsausgangssignals das besagte Steuerungssignal zu erzeugen und auszugeben; und
- eine Vorrichtung (10) zur Bereitstellung mindestens eines Eingangssensorsignals wie in Anspruch 14 angegeben, welche mit mindestens einem Sensor (3) des gesteuerten Systems verbunden ist, um ein reales Sensorsignal zu empfangen, das von dem besagten Sensor (3) bereitgestellt wird,
wobei
das virtuelle Sensorsignal der tatsächliche Wert ist, der beeinflusst werden soll.

16. Steuerungsvorrichtung wie in Anspruch 15 angegeben, welche ferner folgendes umfasst:
- eine Stellermodelleinheit (25), die mit der Steuerung (13) verbunden ist, um das Steuerungsausgangssignal zu empfangen, wobei die Stellermodelleinheit (25) ein Stellermodell beinhaltet und dafür ausgelegt ist, auf der Grundlage des Steuerungsausgangssignals und des Stellermodells ein simuliertes Steuerungssignal zu erzeugen,
- eine Differenzfunktionseinheit (29), die verbunden ist mit dem Steller (15), um das Steuerungssignal zu empfangen, und mit der Stellermodelleinheit (25), um das simulierte Steuerungssignal zu empfangen, und die dafür ausgelegt ist, ein Differenzsignal zu erzeugen und auszugeben, das die Differenz zwischen dem Steuerungssignal und dem simulierten Steuerungssignal repräsentiert;
wobei die Steuerung (13) ebenfalls mit der Differenzfunktionseinheit (29) verbunden ist, um das Differenzsignal zu empfangen, und wobei die Steuerung (13) dafür ausgelegt ist, das besagte Steuerungsausgangssignal auf der Grundlage des Differenzsignals und der Abweichung des tatsächlichen Wertes von dem Sollwert oder Bezugswert zu erzeugen und auszugeben.

## Revendications

1. Procédé pour la fourniture d'au moins un signal de capteur d'entrée pour une application de contrôle et/ou surveillance (13) concernant une installation (1), comprenant les étapes de :
- fourniture d'au moins un signal de capteur réel basé sur au moins une quantité mesurée au niveau de l'installation (1) ;
- fourniture d'au moins un modèle dynamique de l'installation ;
- estimation d'états sur au moins la base du au moins un signal de capteur en utilisant le modèle dynamique ;
- génération d'au moins un signal de capteur virtuel à partir des états estimés en calculant au moins une condition locale au niveau de l'installation à partir des états estimés et établissement du au moins un signal de capteur virtuel à partir de la au moins une condition locale ;
- fourniture du au moins un signal de capteur virtuel en tant que le au moins un signal de capteur d'entrée pour l'application de contrôle et/ou surveillance (13),
**caractérisé en ce que**
- l'installation est une turbine à vent (1),
- le modèle dynamique comprend une représentation de dynamiques structurelles de la turbine à vent (1) et de leur interaction avec des cisaillements du vent et/ou le sillage de la turbine à vent,
- les états estimés sont des cisaillements du vent et/ou des états de sillage et/ou des états structurels estimés de la turbine à vent (1) ;
et
- l'application de contrôle et/ou surveillance est l'une des suivantes :
(a) un contrôle aérodynamique de pales (13) basé sur une entrée aérodynamique dépendant de conditions d'écoulement local, où le au moins un signal de capteur virtuel représente une condition d'écoulement de vent local ;
(b) une servocommande d'inclinaison basée sur des forces d'appui et/ou des moments d'appui, où le au moins un signal de capteur virtuel représente une force d'appui et/ou un moment d'appui ;
(c) un moyen d'estimation des dommages dus à la fatigue basé sur des charges à long terme, où le au moins un signal de capteur virtuel représente une charge à l'intérieur de la turbine à vent (1).

2. Procédé selon la revendication 1, dans lequel le calcul de la au moins une condition locale est basé sur une relation non-linéaire entre des états.

3. Procédé selon la revendication 1 ou la revendication 2,
dans lequel le calcul de la au moins une condition locale est basé sur une relation dynamique entre des états.

4. Procédé selon la revendication 1 ou la revendication 2,
dans lequel le calcul de la au moins une condition locale est basé sur une relation linéaire donnée par une analyse des perturbations des états autour de leur valeur stable.

5. Procédé selon l'une des revendications 2 à 4, dans lequel le calcul de la au moins une condition locale est également basé, en plus, sur le résultat d'au moins une mesure réelle.

6. Procédé selon l'une des revendications précédentes, dans lequel au moins un signal de sortie est fourni par l'application de contrôle et/ou surveillance (13) et dans lequel l'estimation des états est réalisée sur la base du au moins un signal de capteur réel et du au moins un signal de sortie.

7. Procédé selon l'une des revendications précédentes, dans lequel l'estimation d'états comprend l'estimation d'états futurs.

8. Procédé selon la revendication 7, dans lequel un ou plusieurs ensemble/s d'états futurs est/sont estimé/s en fonction d'un ou plusieurs scénario/scénarii d'entrée futur/s.

9. Procédé selon l'une des revendications précédentes, dans lequel l'estimation d'états est basée sur un filtre linéaire récursif.

10. Procédé selon l'une des revendications précédentes, **caractérisé en ce que** l'application de contrôle et/ou surveillance est un contrôle aérodynamique de pales (13) basé sur une entrée aérodynamique dépendant de conditions d'écoulement local, où le au moins un signal de capteur virtuel représente une condition d'écoulement de vent local et **en ce que** l'écoulement local est calculé à partir de relations vectorielles entre des composantes de vitesse du vent estimées et des états structurels estimés de la turbine à vent (1).

11. Procédé selon la revendication 10, dans lequel le signal de capteur virtuel représente une vitesse de vent estimée et/ou l'angle d'attaque du vent.

12. Procédé selon la revendication 11, dans lequel le signal de capteur virtuel représente une vitesse de vent estimée à l'avant d'une pale de rotor.

13. Procédé selon l'une des revendications 1 à 9, dans lequel l'application de contrôle et/ou surveillance est une servocommande d'inclinaison basée sur des forces d'appui et/ou des moments d'appui, où le au moins un signal de capteur virtuel représente une force d'appui et/ou un moment d'appui et dans lequel le modèle dynamique comprend, en outre, une représentation de la torsion des pales.

14. Dispositif (10) pour la fourniture d'au moins un signal de capteur d'entrée pour un dispositif de contrôle et/ou surveillance concernant une installation (1), comprenant :
- au moins une unité de modèle (7) contenant un modèle dynamique de l'installation (1) qui est conçue pour fournir en sortie une représentation modèle de l'installation (1) ;
- au moins un moyen d'estimation d'états (5) qui contient une entrée de signal de capteur pouvant être connectée à une sortie d'un capteur (3) de l'installation (1) pour recevoir un signal de capteur réel fourni par ledit capteur (3), le au moins un moyen d'estimation d'états (5) étant connecté à la au moins une unité de modèle (7) pour recevoir une représentation modèle de l'installation (1) et étant conçu pour estimer des états sur au moins la base du au moins un signal de capteur réel et de la représentation modèle de l'installation (1) et pour fournir en sortie lesdits états estimés ; et
- au moins un générateur de signaux (9) qui est connecté au moyen d'estimation d'états (5) pour recevoir des états estimés, le générateur de signaux étant conçu pour générer au moins un signal de capteur virtuel à partir des états estimés et comprenant une sortie pouvant être connectée à un dispositif de contrôle et/ou surveillance (13) pour fournir en sortie ledit au moins un signal de capteur virtuel,
**caractérisé en ce que**
- l'installation est une turbine à vent (1),
- le modèle dynamique comprend une représentation de dynamiques structurelles de la turbine à vent (1) et de leur interaction avec des cisaillements du vent et/ou le sillage de la turbine à vent,
- les états estimés sont des cisaillements du vent et/ou des états de sillage et/ou des états structurels estimés de la turbine à vent (1) ;
et
- l'application de contrôle et/ou surveillance est l'une des suivantes :
(a) un contrôle aérodynamique de pales (13) basé sur une entrée aérodynamique dépendant de conditions d'écoulement local, où le au moins un signal de capteur virtuel représente une condition d'écoulement de vent local ;
(b) une servocommande d'inclinaison basée sur des forces d'appui et/ou des moments d'appui, où le au moins un signal de capteur virtuel représente une force d'appui et/ou un moment d'appui ;
(c) un moyen d'estimation des dommages dus à la fatigue basé sur des charges à long terme, où le au moins un signal de capteur virtuel représente une charge à l'intérieur de la turbine à vent (1).

15. Dispositif de contrôle pour agir sur un système contrôlé d'une installation (1) au moyen d'un signal de contrôle pour influencer une valeur réelle du système contrôlé, le dispositif de contrôle comprenant :
- un régulateur (13) qui est conçu pour générer et pour fournir en sortie, au moins sur la base d'un écart de la valeur réelle par rapport à une valeur de consigne ou une valeur de référence, un signal de sortie de régulateur représentant un signal de contrôle qui doit être généré pour le système contrôlé pour influencer, au moins indirectement, ladite valeur réelle ;
- un servomoteur (15) qui est connecté au régulateur (13) pour recevoir le signal de sortie de régulateur, le servomoteur (15) étant conçu pour générer et pour fournir en sortie, sur la base du signal de sortie de régulateur, ledit signal de contrôle ; et
- un dispositif (10) pour fournir au moins un signal de capteur d'entrée selon la revendication 14, qui est connecté à au moins un capteur (3) du système contrôlé pour recevoir un signal de capteur réel fourni par ledit capteur (3),
dans lequel le signal de capteur virtuel est la valeur réelle que l'on veut influencer.

16. Dispositif de contrôle selon la revendication 15, qui comprend, en outre :
- une unité de modèle de servomoteur (25) qui est connectée au régulateur (13) pour recevoir le signal de sortie de régulateur, l'unité de modèle de servomoteur (25) contenant un modèle de servomoteur et étant conçue pour générer un signal de contrôle simulé sur la base du signal de sortie de régulateur et du modèle de servomoteur,
- une unité de fonction de différence (29) qui est connectée au servomoteur (15) pour recevoir le signal de contrôle et à l'unité de modèle de servomoteur (25) pour recevoir le signal de contrôle simulé et qui est conçue pour générer et pour fournir en sortie un signal différentiel représentant la différence entre le signal de contrôle et le signal de contrôle simulé ;
dans lequel le régulateur (13) est également connecté à l'unité de fonction de différence (29) pour recevoir le signal différentiel et dans lequel le régulateur (13) est conçu pour générer et pour fournir en sortie ledit signal de sortie de régulateur sur la base du signal différentiel et de l'écart de la valeur réelle par rapport à la valeur de consigne ou la valeur de référence.
